# FASCICULE DE BREVET EUROPEEN

(11) **EP 3 807 224 B1**
(45) Date de publication et mention de la délivrance du brevet: **06.04.2022**
(21) Numéro de dépôt: 19746114.8
(22) Date de dépôt: 11.06.2019
(51) Int. Cl.: C03C 17/34

(54) **SUBSTRAT VERRIER A L'ASPECT DE METAL TEXTURE**
GLASSUBSTRAT MIT DEM AUSSEHEN EINES STRUKTURIERTEN METALLS
GLASS SUBSTRATE WITH THE APPEARANCE OF A TEXTURED METAL

(30) Priorité: 15.06.2018 FR 1870703
(43) Date de publication de la demande: 21.04.2021
(73) Titulaire: Saint-Gobain Glass France, 92400 Courbevoie (FR)
(72) Inventeur: CHAHBOUNE, Kamel, 02200 Soissons (FR)
(74) Mandataire: Saint-Gobain Recherche
(86) Numéro de dépôt international: PCT/FR2019/051406
(87) Numéro de publication internationale: WO 2019/239055

(56) Documents cités:
- EP-A2- 0 636 588
- US-A- 5 030 503
- US-A1- 2016 185 657

## Description

La présente invention a trait à des éléments de décoration ayant un aspect de métal texturé, tel que d'inox ou aluminium brossé, bouchonné... Il s'agit d'éléments pour l'électroménager tel que porte de four, fond de hotte, d'éléments de décoration intérieure tels que crédence, mobilier, porte de placard, cloison en verre, de bandeaux ou panneaux de décoration pour véhicule notamment automobile, aérien..., d'éléments de mobilier urbain...

Généralement, un panneau de métal brossé ou similaire est fixé sur un support en face avant de l'élément décoré par rapport à l'utilisateur. Ce panneau est vulnérable vis-à-vis des rayures, des produits ménagers, et les traces de doigts ou équivalent le marquent excessivement.

L'assemblage du panneau de métal texturé à son support constitue une étape supplémentaire de la fabrication relativement coûteuse en matière et main d'œuvre.

De plus, le panneau de métal n'épouse jamais parfaitement son support : il existe au contraire un interstice dans lequel des salissures sont susceptibles de s'accumuler, et qu'il est difficile de nettoyer. Les documents EP 0 636 588, US 5 030 503 et US 2016/185657 décrivent des substrats verrier émaillés.

Il a maintenant pu être remédié à ces inconvénients par l'invention qui, en conséquence, a pour objet un substrat verrier dont une face est successivement revêtue d'une première couche d'un premier émail métallique non uniforme sur toute la surface, mais selon un motif, puis d'une seconde couche d'un second émail métallique d'épaisseur sensiblement uniforme en pleine face, puis d'une troisième couche opacifiante, chaque émail métallique comprenant des particules métalliques.

L'effet métallique texturé, brossé ou équivalent est visible à travers le verre. Les couches d'émail donnant cet effet décoratif recherché peuvent ainsi être positionnées en face arrière du substrat verrier par rapport à l'utilisateur. Les couches d'émail métallique et la couche opacifiante peuvent ainsi être confinées, protégées de toute rayure ou autre agression mécanique, chimique..., tandis que la face avant du substrat verrier par rapport à l'utilisateur procure la résistance aux rayures et la nettoyabilité élevées du verre.

D'autre part, la résistance à la rayure d'un émail est bien supérieure à celle d'une encre organique comme d'une couche obtenue par pulvérisation cathodique sous pression réduite, telle qu'assistée par magnétron.

Il n'est pas exclu, selon l'invention, que d'autres couches fonctionnelles déposées par voie liquide, ou pulvérisation cathodique (magnétron...) soient présentes sous les trois couches, au-dessus ou bien intercalées entre deux d'entre elles.

La première couche d'émail métallique est non uniforme sur toute la surface, mais selon un motif qui donne l'aspect métallique (d'inox, aluminium...) brossé, bouchonné...

La seconde couche d'émail métallique est d'épaisseur uniforme en pleine face : elle recouvre complètement les motifs de la première couche d'émail métallique, en formant des surépaisseurs locales, là où ces motifs sont présents. La seconde couche donne un effet de relief à la texturation conforme aux motifs de la première couche.

Lesdites première et seconde couches d'émail métallique peuvent comprendre les mêmes particules métalliques ou des particules métalliques différentes, en proportions identiques ou différentes, et être de teintes identiques ou différentes.

Le substrat verrier revêtu de ses première et seconde couches d'émail métallique laisse passer la lumière visible, présente une certaine transparence (y compris à travers l'émail métallique). Il est donc nécessaire pour rendre bien visible l'aspect métallique texturé de le révéler en revêtant l'ensemble par la troisième couche opacifiante, qui peut être d'une couleur quelconque.

Selon des caractéristiques préférées du substrat verrier de l'invention :
l'épaisseur de l'ensemble des première, seconde et troisième couches est au moins égale à 30, de préférence 35 µm, et
au plus égale à 70, de préférence 65 µm ;
le substrat verrier est trempé thermiquement ;
lesdites première et seconde couches contiennent les mêmes particules métalliques et/ou sont de même composition et/ou de même teinte ;
la troisième couche est noire, cette couleur procurant le meilleur contraste pour la visibilité du métal texturé à travers le substrat verrier.

L'invention a également pour objet un procédé de fabrication d'un substrat verrier décrit précédemment, caractérisé en ce qu'il comprend
l'impression sur une face du substrat d'une première couche d'un premier émail métallique non uniforme sur toute la surface, mais selon un motif,
le séchage de cette première couche,
l'impression d'une seconde couche d'un second émail métallique d'épaisseur sensiblement uniforme en pleine face,
le séchage de la seconde couche,
l'impression d'une troisième couche opacifiante d'épaisseur sensiblement uniforme en pleine face,
le séchage de la troisième couche, puis
la trempe thermique de l'ensemble obtenu.

Tout séchage est effectué par exemple par rayonnement infrarouge ou ultraviolet.

La trempe thermique peut être effectuée dans un four industriel.

Selon d'autres caractéristiques préférées du procédé selon l'invention :
toute impression est effectuée par sérigraphie ;
la première couche est imprimée en une épaisseur liquide comprise entre 15 et 35, de préférence 20 et 30 µm ;
la seconde couche est imprimée en une épaisseur liquide comprise entre 35 et 55, de préférence 40 et 50 µm ;
la troisième couche est imprimée en une épaisseur liquide comprise entre 30 et 50, de préférence 35 et 45 µm.

L'invention a également pour objet l'application d'un substrat verrier décrit précédemment comme mobilier, porte de placard, cloison en verre, crédence, pour l'électroménager, comme fond de hotte, porte de four à bandeaux de porte, ou tout produit verrier à l'aspect de métal texturé.

Selon des caractéristiques préférées de cette application :
la face revêtue des première, seconde et troisième couches est la face arrière du substrat verrier par rapport à l'utilisateur ; ainsi est-elle protégée d'éventuelles dégradations mécaniques/chimiques susceptibles de se produire plus souvent côté utilisateur ;
le substrat verrier est associé à une ou plusieurs autres feuilles de verre, en un vitrage feuilleté au moyen d'une couche adhésive intercalaire, et/ ou en un vitrage multiple au moyen d'un espaceur, qui définit une lame d'air ou de gaz sec, éventuellement sous pression réduite, entre deux feuilles de verre ;
il s'agit d'une application comme porte de four, celle-ci étant un vitrage multiple dont le substrat verrier constitue la feuille de verre la plus proche de l'utilisateur ; la face revêtue des trois couches selon l'invention, de préférence face arrière du substrat verrier par rapport à l'utilisateur, ou face 2 (la face 1 étant définie comme celle la plus proche de l'utilisateur), atteint alors 60 °C au maximum, dans les cycles de pyrolyse du four.

L'invention est maintenant illustrée à l'aide de l'exemple de réalisation suivant.

Une feuille de verre flotté sodocalcique de 4 mm d'épaisseur est destinée à constituer la feuille de verre d'une porte de four la plus proche de l'utilisateur. Celle des deux faces de cette feuille de verre qui est destinée à être la face arrière par rapport à l'utilisateur est revêtue de trois couches.

Pour la première couche, on emploie une composition liquide de départ d'un émail métallique commercialisé par la Société Ferro GmbH sous la référence 19 4030 AL-6472-O et de 3 % en poids d'un émail métallique commercialisé par la Société Ferro GmbH sous la référence 17 4030 AL-6472-O. Ces deux compositions liquides ont comme solvant le (2-méthoxyméthyléthoxy)propanol (commercialisé par la Société Ferro GmbH sous la référence 80 1022-MS), qui est utilisé pour ajuster la viscosité de la composition liquide.

Pour cette première couche, la viscosité est ainsi ajustée à 9 Pa.s.

On utilise un écran de sérigraphie de 77.48 (77 lignes/cm, diamètre du fil de 48 µm). Cet écran définit des motifs auxquels la première couche se conformera, et qui produiront un effet d'aluminium brossé.

On utilise une racle de dureté 75 Shore A. L'épaisseur liquide moyenne des motifs de la première couche est d'environ 25 µm.

Les motifs de la première couche liquide sont séchés, notamment par infrarouge. Pour cela un sécheur possédant des lampes infra rouge est utilisé. Il permet d'atteindre une température de l'ordre de 100 à 150 °C à la surface du verre.

On forme ensuite la seconde couche pleine face, c'est-à-dire en une épaisseur sensiblement uniforme, recouvrant totalement les motifs de la première couche, qui forment une surépaisseur.

La composition liquide est identique à celle de la première couche.

A la différence de la première couche, l'écran de sérigraphie est de 43.80 (43 lignes/cm, diamètre du fil de 80 µm), et il ne définit aucun motif (impression pleine face).

On utilise une racle de dureté 75 Shore A ou 65 Shore A. L'épaisseur liquide moyenne de la seconde couche est de 45 µm environ.

On sèche la seconde couche liquide comme les motifs de la première couche précédemment (à l'aide d'un sécheur infra rouge avec les mêmes températures de séchage, à savoir entre 100 et 150 °C).

Les première et seconde couches définissent un cadre périphérique qui n'atteint pas la périphérie de la feuille de verre. L'ensemble de ces deux couches n'est pas opaque mais translucide, on peut voir à travers elles dans une certaine mesure.

Conformément à un cadre périphérique incluant celui des première et seconde couches, on forme la troisième couche opacifiante (opaque) à partir d'une composition liquide d'émail noir commercialisé par la Société Ferro GmbH sous la référence 14 4011 AL-6477-O. Cette composition liquide a comme solvant le (2-méthoxyméthyléthoxy)propanol (commercialisé par la Société Ferro GmbH sous la référence 80 1022-MS), qui est utilisé pour ajuster la viscosité de la composition liquide.

Comme pour les première et seconde couches, la troisième est déposée par sérigraphie, à une viscosité de 12 Pa.s au moyen d'un écran 43.80 (voir cidessus). Un écran ayant un maillage différent de 43.80 peut aussi être utilisé si le produit nécessite plus ou moins d'opacité.

On utilise une racle de dureté 75 Shore A ou 65 Shore A.

L'épaisseur liquide moyenne de troisième couche est d'environ 40 µm (pour un écran de 43.80), l'épaisseur variera si on utilise un écran différent (plus le maillage est grand, moins le dépôt liquide est épais).

La troisième couche est séchée (à l'aide d'un sécheur infra rouge avec les mêmes températures de séchage de 100 à 150 °C).

La feuille de verre est ensuite trempée thermiquement dans un four de trempe industriel (la première zone du four permet de cuire l'émail à une température d'environ 650 °C pendant une durée égale à 45 s par mm d'épaisseur du verre, donc 180 s pour une feuille de verre de 4 mm d'épaisseur, puis la deuxième zone permet de refroidir brutalement le verre ce qui va générer des contraintes à cœur et augmenter considérablement sa résistance mécanique).

On vérifie que l'ensemble des trois couches est bien opaque par mesure de la densité optique au moyen d'un densitomètre conforme aux normes ANSI PH2.19 et ISO 5/2 de densitométrie par transmission. On utilise un densitomètre X-Rite^{®} 341C portable (Société X-Rite, Inc.) : on mesure une densité optique de 3,1, qui exprime une opacité suffisante pour l'application comme porte de four, selon les spécifications généralement requises.

## Revendications

1. Substrat verrier dont une face est successivement revêtue d'une première couche d'un premier émail métallique non uniforme sur toute la surface, mais selon un motif, puis d'une seconde couche d'un second émail métallique d'épaisseur sensiblement uniforme en pleine face, puis d'une troisième couche opacifiante, chaque émail métallique comprenant des particules métalliques.

2. Substrat verrier selon la revendication 1, **caractérisé en ce que** l'épaisseur de l'ensemble des première, seconde et troisième couches est au moins égale à 30, de préférence 35 µm.

3. Substrat verrier selon l'une des revendications précédentes, **caractérisé en ce que** l'épaisseur de l'ensemble des première, seconde et troisième couches est au plus égale à 70, de préférence 65 µm.

4. Substrat verrier selon l'une des revendications précédentes, **caractérisé en ce qu'**il est trempé thermiquement.

5. Substrat verrier selon l'une des revendications précédentes, **caractérisé en ce que** lesdites première et seconde couches contiennent les mêmes particules métalliques et/ou sont de même composition et/ou de même teinte.

6. Substrat verrier selon l'une des revendications précédentes, **caractérisé en ce que** la troisième couche est noire.

7. Procédé de fabrication d'un substrat verrier selon l'une des revendications précédentes, **caractérisé en ce qu'**il comprend
l'impression sur une face du substrat d'une première couche d'un premier émail métallique non uniforme sur toute la surface, mais selon un motif,
le séchage de cette première couche,
l'impression d'une seconde couche d'un second émail métallique d'épaisseur sensiblement uniforme en pleine face,
le séchage de la seconde couche,
l'impression d'une troisième couche opacifiante d'épaisseur sensiblement uniforme en pleine face,
le séchage de la troisième couche, puis
la trempe thermique de l'ensemble obtenu.

8. Procédé selon la revendication 7, **caractérisé en ce que** toute impression est effectuée par sérigraphie.

9. Procédé selon la revendication 7 ou 8, **caractérisé en ce que** la première couche est imprimée en une épaisseur liquide comprise entre 15 et 35, de préférence 20 et 30 µm.

10. Procédé selon l'une des revendications 7 à 9, **caractérisé en ce que** la seconde couche est imprimée en une épaisseur liquide comprise entre 35 et 55, de préférence 40 et 50 µm.

11. Procédé selon l'une des revendications 7 à 10, **caractérisé en ce que** la troisième couche est imprimée en une épaisseur liquide comprise entre 30 et 50, de préférence 35 et 45 µm.

12. Application d'un substrat verrier selon l'une des revendications 1 à 6 comme mobilier, porte de placard, cloison en verre, crédence, pour l'électroménager, comme fond de hotte, porte de four à bandeaux de porte, ou tout produit verrier à l'aspect de métal texturé.

13. Application selon la revendication 9, **caractérisée en ce que** la face revêtue des première, seconde et troisième couches est la face arrière du substrat verrier par rapport à l'utilisateur.

14. Application selon l'une des revendications 12 ou 13, **caractérisée en ce que** le substrat verrier est associé à une ou plusieurs autres feuilles de verre, en un vitrage feuilleté au moyen d'une couche adhésive intercalaire, et/ ou en un vitrage multiple au moyen d'un espaceur.

15. Application selon la revendication 14 comme porte de four, **caractérisée en ce que** celle-ci est un vitrage multiple dont le substrat verrier constitue la feuille de verre la plus proche de l'utilisateur.

## Patentansprüche

1. Glassubstrat, von dem eine Fläche nacheinander mit einer ersten Schicht einer ersten metallischen Emaille, nicht gleichmäßig über die gesamte Oberfläche, sondern nach einem Muster, anschließend mit einer zweiten Schicht einer zweiten metallischen Emaille von im Wesentlichen gleichmäßiger Dicke auf der gesamten Fläche und anschließend mit einer dritten, lichtundurchlässig machenden Schicht beschichtet ist, wobei jede metallische Emaille Metallpartikel umfasst.

2. Glassubstrat nach Anspruch 1, **dadurch gekennzeichnet, dass** die Dicke der Gesamtheit der ersten, zweiten und dritten Schicht mindestens 30, vorzugsweise 35 µm beträgt.

3. Glassubstrat nach einem der vorstehenden Ansprüche, **dadurch gekennzeichnet, dass** die Dicke der Gesamtheit der ersten, zweiten und dritten Schicht höchstens 70, vorzugsweise 65 µm beträgt.

4. Glassubstrat nach einem der vorstehenden Ansprüche, **dadurch gekennzeichnet, dass** es thermisch gehärtet ist.

5. Glassubstrat nach einem der vorstehenden Ansprüche, **dadurch gekennzeichnet, dass** die erste und zweite Schicht die gleichen Metallpartikel enthalten und/oder die gleiche Zusammensetzung und/oder den gleichen Farbton aufweisen.

6. Glassubstrat nach einem der vorstehenden Ansprüche, **dadurch gekennzeichnet, dass** die dritte Schicht schwarz ist.

7. Verfahren zur Herstellung eines Glassubstrats nach einem der vorstehenden Ansprüche, **dadurch gekennzeichnet, dass** es umfasst: das Bedrucken einer Fläche des Substrats mit einer ersten Schicht einer ersten metallischen Emaille, nicht gleichmäßig über die gesamte Oberfläche, sondern nach einem Muster, Trocknen dieser ersten Schicht,
das Bedrucken der gesamten Fläche mit einer zweiten Schicht einer zweiten metallischen Emaille von im Wesentlichen gleichmäßiger Dicke,
das Trocknen der zweiten Schicht,
das Bedrucken der gesamten Fläche mit einer dritten, lichtundurchlässig machenden Schicht von im Wesentlichen gleichmäßiger Dicke,
das Trocknen der dritten Schicht, anschließend
das thermische Härten der erhaltenen Gesamtheit.

8. Verfahren nach Anspruch 7, **dadurch gekennzeichnet, dass** das gesamte Bedrucken durch Siebdruck erfolgt.

9. Verfahren nach einem der Ansprüche 7 oder 8, **dadurch gekennzeichnet, dass** die erste Schicht mit einer flüssigen Dicke zwischen 15 und 35, vorzugsweise 20 und 30 µm gedruckt wird.

10. Verfahren nach einem der Ansprüche 7 bis 9, **dadurch gekennzeichnet, dass** die zweite Schicht mit einer flüssigen Dicke zwischen 35 und 55, vorzugsweise 40 und 50 µm gedruckt wird.

11. Verfahren nach einem der Ansprüche 7 bis 10, **dadurch gekennzeichnet, dass** die dritte Schicht mit einer flüssigen Dicke zwischen 30 und 50, vorzugsweise 35 und 45 µm gedruckt wird.

12. Anwendung eines Glassubstrats nach einem der Ansprüche 1 bis 6 als Möbel, Schranktür, Glastrennwand, Anrichte, für Haushaltsgeräte, als Rückwand einer Dunstabzugshaube, Ofentür mit Türleisten oder beliebiges Glasprodukt mit dem Aussehen von strukturiertem Metall.

13. Anwendung nach Anspruch 9, **dadurch gekennzeichnet, dass** die mit der ersten, zweiten und dritten Schicht beschichtete Fläche die rückseitige Fläche des Glassubstrats in Bezug auf den Benutzer ist.

14. Anwendung nach einem der Ansprüche 12 oder 13, **dadurch gekennzeichnet, dass** das Glassubstrat mit einer oder mehreren anderen Glasscheiben mittels einer Klebstoffzwischenschicht zu einer Verbundverglasung und/oder mittels eines Abstandshalters zu einer Mehrfachverglasung verbunden ist.

15. Anwendung nach Anspruch 14 als Ofentür, **dadurch gekennzeichnet, dass** es sich um eine Mehrfachverglasung handelt, von der das Glassubstrat die Glasscheibe bildet, die dem Benutzer am nächsten ist.

## Claims

1. A glass substrate one face of which is coated in succession with a first layer of a first metallic enamel which is not uniform over the entire surface, but follows a pattern, then with a second layer of a second metallic enamel of a thickness that is substantially uniform over the full face, then with an opacifying third layer, each metallic enamel containing metallic particles.

2. The glass substrate as claimed in claim 1, **characterized in that** the thickness of the combination of the first, second and third layers is at least equal to 30, preferably 35 µm.

3. The glass substrate as claimed in either one of the preceding claims, **characterized in that** the thickness of the combination of the first, second and third layers is at most equal to 70, preferably 65 µm.

4. The glass substrate as claimed in one of the preceding claims, **characterized in that** it is thermally toughened.

5. The glass substrate as claimed in one of the preceding claims, **characterized in that** said first and second layers contain the same metallic particles and/or have the same composition and/or the same shade.

6. The glass substrate as claimed in one of the preceding claims, **characterized in that** the third layer is black.

7. A method for manufacturing a glass substrate as claimed in one of the preceding claims, **characterized in that** it comprises
printing on one face of the substrate a first layer of a first metallic enamel that is not uniform over the entire surface but follows a pattern,
drying this first layer,
printing a second layer of a second metallic enamel of substantially uniform thickness over the full face,
drying the second layer,
printing an opacifying third layer of substantially uniform thickness over the full face,
drying the third layer, then
thermally toughening the assembly obtained.

8. The method as claimed in claim 7, **characterized in that** any printing is performed using screen printing.

9. The method as claimed in claim 7 or 8, **characterized in that** the first layer is printed in a liquid thickness comprised between 15 and 35, preferably 20 and 30 µm.

10. The method as claimed in one of claims 7 to 9, **characterized in that** the second layer is printed in a liquid thickness comprised between 35 and 55, preferably 40 and 50 µm.

11. The method as claimed in one of claims 7 to 10, **characterized in that** the third layer is printed in a liquid thickness comprised between 30 and 50, preferably 35 and 45 µm.

12. The application of a glass substrate as claimed in one of claims 1 to 6 as furniture, cupboard door, glass partition, midway panel, for household electrical applications such as hood cover, oven door with door strips, or any other glass product with the appearance of textured metal.

13. The application as claimed in claim 9, **characterized in that** the face coated with the first, second and third layers is the rear face of the glass substrate with respect to the user.

14. The application as claimed in one of claims 12 and 13, **characterized in that** the glass substrate is associated with one or more other sheets of glass to form laminated glazing laminated by means of an adhesive interlayer, and/or to form multiple glazing by means of a spacer.

15. The application as claimed in claim 14 as an oven door, **characterized in that** this is multiple glazing of which the glass substrate constitutes the sheet of glass closest to the user.
